# FASCICULE DE BREVET EUROPEEN

(11) **EP 1 464 092 B1**
(45) Date de publication et mention de la délivrance du brevet: **15.06.2005**
(21) Numéro de dépôt: 03700031.2
(22) Date de dépôt: 09.01.2003
(51) Int. Cl.: H01M 8/12, H01M 8/24

(54) **PEN DE SOFC**
PEN EINER FESTOXIDBRENNSTOFFZELLE
SOFC PEN

(30) Priorité: 09.01.2002 EP 02405007
(43) Date de publication de la demande: 06.10.2004
(73) Titulaire: HTceramix S.A. - High Technology Electroceramics, 1400 Yverdon-les-Bains (CH)
(72) Inventeur: IHRINGER, Raphael, CH-1018 Lausanne (CH); CLOSSET, Alexandre, CH-1205 Genève (CH); SFEIR, Joseph, CH-6260 Reiden (CH); BUCHELI, Olivier, Franz, CH-1005 Lausanne (CH)
(74) Mandataire: Ganguillet, Cyril
(86) Numéro de dépôt international: PCT/CH2003/000008
(87) Numéro de publication internationale: WO 2003/058744

(56) Documents cités:
- WO-A-01/41239
- WO-A-01/57945
- WO-A-01/67534
- US-A- 5 230 849
- PATENT ABSTRACTS OF JAPAN vol. 015, no. 348 (E-1107), 4 septembre 1991 (1991-09-04) -& JP 03 134964 A (FUJI ELECTRIC CO LTD), 7 juin 1991 (1991-06-07) cité dans la demande
- PATENT ABSTRACTS OF JAPAN vol. 016, no. 472 (E-1272), 30 septembre 1992 (1992-09-30) -& JP 04 169071 A (FUJI ELECTRIC CO LTD), 17 juin 1992 (1992-06-17) cité dans la demande
- PATENT ABSTRACTS OF JAPAN vol. 016, no. 294 (E-1225), 29 juin 1992 (1992-06-29) -& JP 04 079163 A (FUJI ELECTRIC CO LTD), 12 mars 1992 (1992-03-12) cité dans la demande
- PATENT ABSTRACTS OF JAPAN vol. 1997, no. 02, 28 février 1997 (1997-02-28) -& JP 08 264198 A (NGK INSULATORS LTD), 11 octobre 1996 (1996-10-11)
- PATENT ABSTRACTS OF JAPAN vol. 1996, no. 07, 31 juillet 1996 (1996-07-31) -& JP 08 078040 A (MITSUBISHI HEAVY IND LTD), 22 mars 1996 (1996-03-22)

## Description

La présente invention concerne le domaine des piles à combustible à oxydes solides couramment appelées SOFC (Solid Oxyde Fuel Cell).

Une pile à combustible possède une anode et une cathode, séparées par un électrolyte transportant les ions mais ne conduisant pas les électrons. L'ensemble cathode - électrolyte - anode est couramment appelé PEN (Positive - Electrolyte - Negative). L'électrolyte est constitué d'un oxyde de métal, sous forme solide, non poreuse, par exemple une zircone, capable de transporter des anions oxygène. L'anode, poreuse, est le lieu d'une réaction d'oxydation d'un carburant gazeux, généralement de l'hydrogène, ou encore d'un carburant organique (méthanol, fuel léger, gaz naturel) dont on extrait l'hydrogène par reformage. A la cathode, poreuse, se produit une réaction de réduction de l'oxygène de l'air. La réaction est continue grâce à l'apport constant des gaz carburants et comburants, produit deux électrons par molécule d'hydrogène et délivre un potentiel de l'ordre de 0,6 à 1,2 V, ainsi que de la chaleur. Il est nécessaire d'associer plusieurs SOFC en série afin d'obtenir une tension de sortie plus élevée. Dans le concept SOFC planaire, on forme un empilement - couramment appelé "stack" - dont chaque unité comprend une ou plusieurs plaque(s) de céramique(s) et/ou de métal de quelques dixièmes de millimètres à quelques millimètres d'épaisseur, intégrant l'ensemble des composants électrochimiquement actifs du PEN et une plaque d'interconnexion parfois appelée plaque dipolaire.

L'invention concerne en particulier un PEN de SOFC avec une cathode, ladite cathode comprenant une couche poreuse de cathode et une couche active de cathode, avec une anode, ladite anode comprenant une couche active d'anode et une couche support anode poreuse, ladite couche support anode constituant le support mécanique du PEN, et avec au moins une couche non poreuse d'électrolyte, ladite couche d'électrolyte étant placée entre lesdites couches actives d'anode et de cathode.

Le document "Status of the Sulzer Hexis solid oxide fuel cell (SOFC) system development", R. Diethelm et al., Third European Solid Oxide Fuel Cell Forum, P. Stevensed., Nantes, juin 1998, p. 87-93, décrit une SOFC développée par la société Sulzer Hexis (CH). L'apport des gaz carburants et comburants aux électrodes est assuré par une plaque d'interconnexion constituée d'un disque en alliage métallique riche en chrome (94 % Cr, 5 % Fe, 1 % Y₂O₃), percé d'un trou central et structuré par usinage sur ses deux faces, celles-ci présentant alternativement des ouvertures vers l'extérieur et vers le trou central. Dans un empilement de ce type, le combustible circule dans le tube central puis est diffusé vers la face anodique de chaque cellule grâce aux ouvertures laissées par la structure de la plaque d'interconnexion. Le combustible ne peut pas pénétrer du côté cathodique, car la plaque d'interconnexion recouvre sur une largeur de quelques millimètres tout le bord intérieur de la cathode. L'air est injecté par l'extérieur par des trous percés dans les plaques d'interconnexion et alignés verticalement, ce qui permet d'amener l'air par des profils en "U" plaqués contre l'empilement. L'air traverse une cavité intérieure de la plaque d'interconnexion, ce qui permet de le chauffer au moyen de la chaleur dégagée par les cellules. Puis, l'air passe sur la face structurée de la plaque d'interconnexion faisant face à la cathode. Sur le côté cathodique de la plaque d'interconnexion, une fine couche de céramique est déposée par VPS (Vacuum Plasma Spraying) afin d'éviter l'évaporation du chrome sous forme de CrO₃. Le diamètre extérieur des plaques d'interconnexion des PEN est d'environ 120 mm et celui du trou intérieur de 22 mm. Un empilement compte environ 70 cellules et mesure environ 50 cm de hauteur; la puissance électrique produite est de 1 kW sous 40 V. Les plaques d'interconnexion de ce type d'empilement sont complexes à réaliser et d'un coût élevé. La puissance et la tension électrique délivrées par ce dispositif sont fonction respectivement de la surface et du nombre de cellules, donc de la surface et du nombre de plaques d'interconnexion, dont le coût constitue un obstacle à la rentabilisation de l'énergie électrique produite par ce type de dispositif.

Les documents JP 04 169071 et JP 04 079163 décrivent un dispositif d'interconnexion agençable entre deux PEN, qui diffère de celui de la cellule Sulzer par le fait qu'il est réalisé en trois parties : une plaque centrale plane porte de chaque côté une couche réalisée en matériaux d'électrode, dans laquelle sont ménagés des canaux pour la circulation des gaz. La résistance électrique additionnelle due au contact entre cette couche et l'électrode proprement dite qui lui fait face est importante, bien qu'elle puisse être réduite grâce à une interface supplémentaire en matériau conducteur.

Le document JP 03 134964 décrit également un dispositif d'interconnexion constitué de trois couches de céramique, dont l'une porte des canaux pour la circulation de gaz. Le PEN est par ailleurs porté par une plaque-substrat, cannelée du côté opposé au PEN pour la circulation de l'autre gaz.

Le brevet US 5,256,499 (Allied Signal Aerospace) décrit un stack de SOFC, constitué d'un empilement de plaques en céramiques percées de plusieurs trous, agencés près des bords des plaques; l'agencement des trous en regard les uns des autres constitue des tubulures latérales d'amenée et d'évacuation des gaz carburants et comburants, les éléments actifs des PEN étant disposés dans la partie centrale. Chaque cellule est constituée d'une plaque formant l'électrolyte, entourée de part et d'autre d'au moins une plaque formant respectivement l'anode et la cathode, ainsi que de deux plaques percées de trous aux dimensions de l'anode et de la cathode, de même épaisseur que ces deux électrodes, entourant celles-ci de façon à former un tronçon de tubulures. Ce PEN est pris en sandwich entre deux plaques d'interconnexion planes. Chaque électrode est elle-même formée soit d'une plaque portant des cannelures ou des plots, soit de l'assemblage d'une plaque plane et d'une plaque ondulée. Les plaques d'interconnexion de ce dispositif sont plus simples et moins onéreuses que les plaques du dispositif de Sulzer, cité plus haut, mais chaque cellule nécessite deux éléments supplémentaires entourant les électrodes pour constituer les tubulures. Ces éléments, presque totalement évidés, sont fragiles et l'étanchéité entre les électrodes et ces éléments est difficile à réaliser. La structure formant les canaux est frittée sur l'électrolyte, ce qui ne permet pas de compenser les défauts de planéité de la cellule. Par ailleurs, dans ce dispositif, la plaque constituant l'électrolyte forme le support mécanique du PEN. Elle doit donc être relativement épaisse et présente par conséquent une résistance ohmique relativement importante. Or, pour augmenter l'efficacité d'une SOFC, il convient d'abaisser au maximum la résistance ohmique en employant un électrolyte peu épais, ce qui n'est pas possible avec des structures dont l'électrolyte constitue le support.

Pour diminuer la résistance ohmique d'une SOFC, le document WO 00/69008 propose d'utiliser une anode poreuse relativement épaisse en tant que support mécanique du PEN et de déposer un électrolyte en couche fine (10 à 40 µm) ainsi qu'une contre-électrode relativement fine sur ce support anode. Toutefois, ce PEN a besoin de plaques d'interconnexion de structure complexe comportant les tubulures d'amenée et d'évacuation des gaz, donc assez épaisse, pour constituer un stack. Cette structure est donc désavantageuse, du fait de son épaisseur et du coût des plaques d'interconnexion.

La demande de brevet WO 01/67534 décrit une anode constituée d'une multitude de colonnettes discrètes de céramique, entre lesquelles peut circuler un gaz, disposées entre un électrolyte en couche fine et une plaque d'interconnexion métallique également fine. Côté cathode, l'électrolyte est également séparé de la plaque d'interconnexion par une structure formée d'une multitude de colonnettes discrètes permettant le passage de gaz entre elles. Les structures constituées des colonnettes sont réalisées par estampage des colonnettes individuelles dans une bande de céramique crue et fixation de ces colonnettes sur une feuille de papier, qui permet leur manipulation. La feuille brûle et disparaît lors de la première mise en service du stack après assemblage. Ce dispositif permet d'utiliser des plaques d'interconnexion planes, donc bon marché. Toutefois, la réalisation de la structure de colonnettes est complexe, et la manipulation des composantes de la cellule lors de l'assemblage est délicate. Enfin, elle nécessite un système supplémentaire étanche d'amenée et d'évacuation des gaz.

Le document JP 08 078040 décrit également un système de colonnettes discrètes de céramique, collées de part et d'autre d'un PEN plan, assurant la liaison électrique avec les plaques d'interconnexion et permettant le passage des gaz. Ce dispositif présente les avantages et inconvénients indiqués ci-dessus à propos du document WO 01/67534.

Le document JP 06 068885 décrit également un système de colonnettes, dans un agencement similaire à celui du document précédent. Les plaques d'électrolyte et les plaques d'interconnexion constituent les supports mécaniques de ce système, les électrodes étant des électrodes très fines, imprimées sur chaque face de la plaque d'électrolyte, qui doit donc, quant à elle, être épaisse, ce qui augmente la résistance ohmique.

La demande de brevet WO 01/41239 décrit également un système de canaux, formé par une multitude de colonnettes discrètes permettant le passage de gaz entre elles. Les structures formées des colonnettes peuvent être réalisées en déposant localement, sur une épaisseur de 0,05 à 0,4 mm, des matériaux constitutifs des électrodes sur les deux faces d'une plaque d'interconnexion plane, par une technique d'impression. Les colonnettes constituent ainsi les électrodes. La plaque d'interconnexion et la plaque d'électrolyte présentent chacune au moins une paire de trous dans leurs zones centrales, chacun des trous étant entouré alternativement, sur chaque face de la plaque d'interconnexion, par un joint d'étanchéité. Les trous de la plaque d'interconnexion et de la plaque d'électrolyte viennent en alignement pour l'alimentation en gaz, ceux-ci s'écoulant radialement vers les bords des plaques entre les colonnettes. La réalisation de la plaque d'interconnexion portant les colonnettes-électrodes est bon marché. Mais la manipulation de la plaque d'électrolyte (0,2 à 0,4 mm d'épaisseur) lors de l'empilement est délicate. Dans ce système, tout comme dans celui décrit dans WO 01/67534, la surface des électrodes est la surface frontale totale des colonnettes, soit seulement une fraction de la surface des plaques. La résistance ohmique du PEN est donc supérieure à celle d'un PEN de même composition dont les électrodes seraient en contact avec toute la surface de l'électrolyte.

Le document WO 01/41239 propose également de réaliser les systèmes de canaux en les creusant, mécaniquement ou chimiquement, dans les surfaces de la plaque d'interconnexion ou des électrodes. Cette variante est onéreuse à réaliser, comme dans le cas des plaques d'interconnexion Sulzer décrites ci-dessus.

Le but de la présente invention est de proposer un PEN de SOFC permettant de réaliser un empilement ne présentant pas les défauts des dispositifs de l'art antérieur. L'invention vise en particulier la réalisation d'empilements pouvant utiliser pour l'interconnexion des SOFC de simples plaques métalliques fines et bon marché. Elle vise simultanément à réaliser des SOFC dont la résistance ohmique est la plus faible possible. Elle vise également à limiter l'encombrement en épaisseur d'une SOFC. Elle vise également à augmenter la puissance électrique disponible par unité de surface. Elle vise enfin à réaliser un PEN et son système d'interconnexion dont la fabrication soit aisée et qui soit facile à manipuler lors de la construction du stack.

Ces buts sont atteints grâce à un PEN du type défini d'entrée, dans lequel l'anode comporte une couche collectrice d'anode, recouvrant la face arrière de la couche support anode, c'est-à-dire du côté opposé à la couche active d'anode, et dans lequel la couche collectrice d'anode présente, sur sa propre face arrière, destinée à venir au contact d'une plaque d'interconnexion, une structure en relief choisie de telle sorte à pouvoir former avec une plaque plane des canaux de circulation de gaz.

Par commodité de langage, on appellera dans la suite de cet exposé face "avant", respectivement structure "antérieure", d'une couche d'électrode d'un PEN sa face, respectivement une structure, orientée vers l'électrolyte, et face "arrière" sa face opposée, donc orientée vers une plaque d'interconnexion.

Un PEN selon l'invention permet donc l'utilisation d'une plaque d'interconnexion constituée d'une simple plaque plane et lisse du côté anode. Par ailleurs, le support mécanique du PEN étant constitué de la couche support anode, lors de l'assemblage de l'électrolyte entre les deux électrodes, on peut réduire cet électrolyte à une couche mince de quelques µm, de faible résistance ohmique.

De préférence, la cathode présente également sur sa face arrière, destinée à venir au contact d'une plaque d'interconnexion, une structure en relief choisie de telle sorte à former avec ladite plaque d'interconnexion des canaux de circulation de gaz. En particulier, les structures en relief de l'anode et de la cathode peuvent comprendre chacune une pluralité de plots proéminents, espacés les uns des autres, les surfaces sommitales des plots de l'anode étant sensiblement coplanaires et parallèles aux surfaces sommitales des plots de la cathode, également sensiblement coplanaires entre elles. Ces structures peuvent comprendre également des bordures d'étanchéité de même épaisseur que la hauteur des plots sur le pourtour des faces arrières des électrodes.

L'ensemble de la structure du PEN s'inscrit donc entre deux plans parallèles. Pour créer un stack, il suffit d'empiler en alternance des PEN de ce type et de simples plaques métalliques planes.

L'amenée des gaz peut être réalisée avantageusement au moyen d'au moins un premier trou et d'au moins un deuxième trou traversant le PEN axialement, c'est-à-dire selon l'axe de l'empilement, la structure en relief de la face arrière de l'anode comprenant au moins une première margelle entourant ledit premier trou, la structure en relief de la face arrière de la cathode comprenant au moins une deuxième margelle entourant ledit deuxième trou, ledit premier trou n'étant pas entouré par une dite deuxième margelle et ledit deuxième trou n'étant pas entouré par une dite première margelle.

Les margelles remplissent la fonction de joints et assurent une quasi-étanchéité. Dans l'empilement, les trous en regard les uns des autres constituent une tubulure parallèle à l'axe du stack et la présence, respectivement l'absence, d'une margelle autour de chaque trou conditionne la diffusion de l'un des gaz exclusivement sur la face arrière de la cathode et de l'autre gaz exclusivement sur la face arrière de l'anode.

Selon un mode d'exécution, les structures en relief de face arrière respectives de la cathode et de l'anode comprennent chacune une bordure entourant chaque face arrière, capable de former chacune, en coopérant avec une plaque d'interconnexion, une enceinte étanche, sauf sur une portion ajourée de ladite bordure. Les deux portions ajourées, vues dans le sens de l'axe d'empilement de la SOFC, n'ont aucune zone de recouvrement. Ces zones ajourées communiquent avec des tubulures latérales d'amenée ou d'évacuation de gaz.

Selon un autre mode d'exécution préféré, les structures en relief des faces arrières des deux électrodes sont entièrement entourées d'une bordure étanche et les plaques constituant l'empilement présentent au moins deux trous de circulation pour chaque gaz, à savoir un trou d'entrée et un trou de sortie, soit au total au moins quatre trous. Ceux-ci forment un ensemble de tubulures interne à l'empilement de cellules, ce qui supprime la nécessité de tubulures latérales d'évacuation et abaisse le coût de fabrication.

Avantageusement, la face avant de l'anode, du côté de l'électrolyte, formant contact avec cet électrolyte, présente également une structure en relief. Une telle face avant présente une surface développée supérieure à la surface en projection suivant l'axe d'empilement. La surface réactive est donc considérablement augmentée, sans augmentation sensible de l'encombrement de l'ensemble du dispositif.

Selon un mode d'exécution préféré, la couche support anode présente sur sa face avant une structure en relief. La couche active d'anode, l'électrolyte et l'ensemble de la cathode peuvent consister en des couches minces, revêtant ladite structure en relief de la face avant de la couche support anode, et cette structure en relief est choisie de telle sorte que la face arrière de la cathode puisse former des canaux de circulation de gaz avec une plaque d'interconnexion plane venant à son contact.

Dans ce mode d'exécution, la structure en relief de la face avant de l'anode a donc une double fonction : d'une part elle augmente la surface réactive du PEN, et d'autre part le relief de cette surface, n'étant pas ou seulement peu atténué par les couches minces qui recouvrent la couche support anode, génère la forme des canaux de circulation de gaz du côté cathode. Dans ce mode d'exécution, la structure de la face avant de la couche support anode peut être obtenue par un procédé de moulage, alors que les couches minces de l'électrolyte et de la cathode peuvent être obtenues par un procédé de dépôt. Cette structure en relief de la face avant de l'anode peut en particulier être constituée d'une pluralité de plots de hauteur comprise entre 0,2 et 2 mm, la distance entre les flancs de plots voisins étant comprise entre 0,1 et 2 mm.

Selon un autre mode d'exécution d'un PEN dont la couche support anode présente sur sa face avant une structure antérieure en relief, la couche active d'anode, l'électrolyte et la couche active de cathode consistent en des couches minces. La couche poreuse de cathode qui les recouvre et qui égalise totalement ou partiellement le relief derrière la couche active de cathode, présente sur sa face arrière, destinée à venir au contact d'une plaque d'interconnexion, une deuxième structure en relief choisie de telle sorte à former avec ladite plaque d'interconnexion des canaux de circulation de gaz. Dans ce mode d'exécution, la structure antérieure en relief de la face avant de la couche support anode et la structure en relief de la face arrière de la couche poreuse de cathode peuvent être choisies avec des configurations différentes, le relief de la structure de la face arrière de la cathode devant être suffisant pour former des canaux de circulation de gaz, alors que la face avant de l'anode peut ne présenter qu'une microstructuration destinée à augmenter sa surface réactive. Cette structure antérieure en relief de la face avant de la couche support anode peut être obtenue par estampage, par micromoulage, en particulier un procédé de micromoulage utilisant la gélification, ou "gel casting", du matériau cru. La hauteur des éléments en relief constituant la structure en relief peut être de 0,1 à 2 mm. La distance entre éléments voisins peut être comprise entre 50 µm et 2 mm. Le rapport entre hauteur et épaisseur de ces éléments peut être compris entre 1 et 4.

Pour obtenir une anode présentant d'une part une première structure en relief sur sa face arrière et d'autre part une structure antérieure en relief sur sa face avant, on peut assembler deux couches, présentant chacune une face lisse et une face structurée, par leurs faces lisses. L'assemblage peut être réalisé lorsque les deux couches sont à l'état cru. La couche formant les canaux de distribution de gaz et la collection de courant peut être déposée sur la couche support anode réalisée au préalable par frittage.

On peut assembler ainsi une couche support anode avec une couche collectrice d'anode. On peut également assembler deux demi-couches, dont l'assemblage constitue la couche support anode.

Une couche support anode structurée sur ses deux faces peut également être réalisée par moulage direct, par exemple par moulage par injection.

Une propriété commune recherchée pour les matériaux d'une pile SOFC est leur aptitude à ne pas se modifier au cours du temps, à la température de fonctionnement de la pile (700 - 1'000°C) dans leurs environnements, oxydant ou réducteur, respectifs.

Les matériaux utilisés pour constituer la cathode, notamment la couche poreuse de cathode, comportent souvent une structure pérovskite, telles les manganates de lanthane dopés au strontium (LSM). Des compositions telles que les cobaltates ou ferrocobaltates de lanthane présentent une plus grande activité que les LSM mais sont susceptibles de réagir avec un électrolyte de zircone.

Entre la couche poreuse de cathode et l'électrolyte peut être agencée une couche active mince (2 à 5 µm) et dense (> 80 %) constituée par exemple d'un mélange de CeO₂ ou de zircone avec un LSM. Ce choix de matériau permet de créer sur l'électrolyte une couche mince d'un matériau qui est conducteur mixte, ionique et électronique.

L'électrolyte est un matériau dense présentant une conductivité ionique élevée, mais une conductivité électronique nulle ou très faible. Le matériau le plus couramment utilisé est la zircone stabilisée, par exemple avec 8 % molaire de Y₂O₃ (8 YSZ), ou partiellement stabilisée, par exemple avec 3 % molaire de Y₂O₃ (3 YSZ).

Des composites de nickel et de zircone, communément appelés "cermets", sont des matériaux préférés pour constituer une anode de SOFC. A titre d'exemple, on peut utiliser un "cermet" Ni-8 YSZ avec 35 à 45 % en poids de phase métallique nickel.

Dans la couche d'anode électrochimiquement active (0,5 à 5 µm), au contact de l'électrolyte, on peut chercher à diminuer la densité de courant dans la phase métallique et augmenter le nombre de particules de la phase métallique appartenant au réseau électriquement percolant, et ainsi augmenter l'activité de l'électrode, en remplaçant une partie de la phase céramique conductrice ionique, c'est-à-dire 8 YSZ, par une céramique conductrice électronique qui ne se réduit pas en métal dans une atmosphère d'hydrogène à la température de fonctionnement de la cellule, c'est-à-dire à environ 800°C. A titre d'exemple d'une telle céramique conductrice, on peut citer CeO₂ dopée avec U₂O₃ (1 à 10 %) ou Nb₂O₅ (1 à 10 %) ou avec 10 à 40 % molaire de Gd ou de Y ou encore U₂O₃ dopée avec Y₂O₃ (1 à 10 %) ou TiO₂ dopée avec Nb ou Ta (1 à 10 %).

La couche support anode est poreuse et constituée d'un matériau conducteur électronique. Pour augmenter sa stabilité, on peut chercher à réduire la proportion de la phase électroniquement conductrice, par exemple Ni, par rapport à la phase céramique, par exemple la zircone. Pour conserver une conductivité électronique suffisante, il est alors nécessaire d'organiser la distribution spatiale de la phase électroniquement conductrice :
- La phase électroniquement conductrice peut être répartie autour de particules de la phase céramique de diamètre moyen trois à dix fois plus grand que l'épaisseur moyenne de la pellicule formée par la phase électroniquement conductrice. Cette structure peut être obtenue par atomisation d'une dispersion de particules fines de zircone, par exemple 0,1 < D50 < 0,3 µm, en particules de taille plus importante, par exemple 15 < D50 < 30 µm et mélange de ces particules à une dispersion de particules fines, par exemple 0,1 < D50 < 0,3 µm de la phase conductrice.
- On peut également agencer préférentiellement la phase électroniquement conductrice sur les parois de pores formées dans la structure. Pour cela, la phase électroniquement conductrice, telle que Ni ou NiO, est au préalable déposée, par exemple par dépôt electroless ou précipitation d'un sel, sur la surface de particules relativement importantes, par exemple 5 < D50 < 30 µm, d'une substance pyrolisable entre 250 et 400°C, telles que des particules de cellulose, de carbone ou d'amidon qui, après pyrolyse, laissent subsister des pores dans la structure de la couche support anode.
- On peut encore fabriquer, dans une première étape, des particules de taille 2 < D50 < 50 µm et de densité inférieure ou égale à 2 g/cm³, contenant du nickel ou tout autre métal de transition (Fe, Co par exemple) sous forme d'oxyde ou d'un sel (oxalate ou carbonate par exemple) et, optionnellement, de la zircone et une phase organique. Elles peuvent être obtenues par exemple par atomisation d'une dispersion de particules fines des matériaux cités ci-avant. Ces particules sont ensuite additionnées à raison d'environ 35 % en volume à des particules de zircone. Ce mélange sert de base pour l'obtention du support anode. Lors du frittage de ce dernier, une porosité est créée à l'intérieur des particules contenant le nickel. Celle-ci permet au nickel de se réoxyder sans détruire la structure du support anode.

L'anode peut aussi comporter, du côté de la plaque d'interconnexion, une couche collectrice fine (1 à 10 µm) ou structurée, enrichie en matériau conducteur électronique, par exemple en nickel. Cette couche permet de réduire les pertes ohmiques de collection de courant.

Les couches constitutives de l'anode, tout comme les couches constitutives de la cathode, et notamment la couche support anode, la couche collectrice anode et la couche poreuse de cathode, peuvent incorporer des fibres. L'emploi d'un matériau composite incorporant des fibres présente de nombreux avantages :
- amélioration de la stabilité dimensionnelle depuis la fabrication jusqu'à l'utilisation, c'est-à-dire de la forme crue à la structure à température opérationnelle et jusqu'à la forme frittée;
- amélioration de la stabilité redox, grâce au choix des matériaux constitutifs des fibres;
- ajustement des coefficients d'expansion thermique des différentes couches, en particulier amélioration de la compatibilité du coefficient d'expansion thermique du support anode avec ceux des autres couches.

On choisira utilement des fibres dont le diamètre est compris entre 1 et 50 µm et dont le rapport longueur/diamètre L/d est compris entre 2 et 30. De préférence, le diamètre sera compris entre 2 et 30 µm et le rapport L/d entre 5 et 25. Des fibres de diamètre 5 à 15 µm et de rapport L/d entre 8 et 20 sont particulièrement préférées.

Pour la cathode, en particulier la couche poreuse de cathode, on peut utiliser des fibres céramiques avec ou sans conductivité électronique. On peut utiliser des fibres de matériaux de type LSM, par exemple La_{0.7}Sr_{0.3}MnO₃, ou de type LSC, en particulier La_{0.7}Sr_{0.3}CoO₃.

Pour la réalisation de l'anode, en particulier la couche collectrice, on peut ajouter de 5 à 60 % en volume, de préférence, 20 à 40 % en volume, et de manière particulièrement préférée 25 à 35 % en volume, de fibres céramiques ou métalliques par rapport au volume total. Le matériau des fibres peut être choisi parmi ZrO₂, Al₂O₃, MgO, Ni ou parmi les céramiques conductrices sous H₂/H₂O telles que TiO₂, TiO₂+5%NbO_{2,5}, CeO₂+1%NbO_{2,5}, Nb₂TiO₇, Nb₂O₅, SrTiO₃, Fe₃O₄.

Enfin, en variante, on peut incorporer au matériau de l'anode, à la place ou en sus des fibres, des particules des matériaux céramiques indiqués ci-dessus, de diamètres compris entre 0,1 et 50 µm, et de préférence 0,3 à 30 µm. Sont particulièrement préférées des particules de diamètres entre 0,5 et 5 µm.

Selon un mode d'exécution préféré de l'invention, les matériaux de l'anode, c'est-à-dire de la couche support anode et/ou en particulier de la couche collectrice d'anode, peuvent incorporer un ou plusieurs catalyseurs, dans le but d'un reformage d'un combustible à base de carbone, de permettre une oxydation directe d'un gaz combustible à base de carbone, par exemple CH₄, partiellement reformé ou non, et/ou d'améliorer la tolérance de la SOFC à la présence de souffre contenu dans le combustible. Une partie de l'anode, qui est une structure poreuse, devient ainsi un élément de reformage interne, sans augmenter la hauteur du stack. Ceci serait impossible avec une plaque d'interconnexion structurée de façon à réaliser des canaux de circulation, réalisée en acier dense.

En tant que catalyseur, on peut employer Ni ou un alliage NiCu sur un support céramique, tel qu'une zircone, de l'alumine, de la magnésie ou de la cérine. Dans le cas d'un catalyseur au nickel, le nickel représente 1 à 25 % en poids des particules, de préférence 1 à 10 %, et plus particulièrement 1,2 à 5 %. Dans le cas d'un catalyseur au NiCu, la teneur de cuivre est de 5 à 50 %, en particulier 10 à 30 %, et plus particulièrement 15 à 25 % de la phase métallique. Dans le cas d'un catalyseur utilisant la magnésie MgO comme support, celle-ci peut être mélangée à un autre oxyde, pour améliorer son pouvoir catalytique ainsi que le coefficient d'expansion thermique et la conductivité de la couche d'anode.

En vue de réaliser l'oxydation directe d'un combustible à base de carbone, par exemple CH₄, non réformé ou déjà partiellement réformé, on peut ajouter en mélange les catalyseurs suivants : NiCu et chromites, la teneur en chromites pouvant varier de 0 à 100 % de ce mélange. La composition optimale des chromites est La₁₋ₓ(Ca, Sr)ₓCr_{1-y}Ni_{y}O₃₋avec x=0-0,15 et y=0-0,5. Le mélange peut également comprendre un autre oxyde conducteur, par exemple des titanates ou des niobates ayant des conductivités de l'ordre de 300 S/cm.

Pour améliorer la tolérance au souffre, on peut ajouter aux catalyseurs de la cérine, CeO₂, dans la proportion de 5 à 100 % en poids par rapport aux catalyseurs à base de Ni, de préférence 10 à 50 %, et en particulier de 15 à 25 % en poids. La présence de Cu à l'anode améliore également la tolérance au souffre.

Ce catalyseur, ou mélange catalytique, est mélangé aux matériaux constitutifs de l'anode typiquement à raison de 5 à 15 % en volume, en restant en dessous du seuil de percolation, pour ne pas perturber la collecte de courant.

La plaque d'interconnexion intercalée entre deux PEN peut être constituée d'un alliage ferritique pour des températures de fonctionnement entre 700 et 800°C, par un alliage à base de chrome pour des températures de fonctionnement entre 800 et 900°C ou encore par une céramique, telle qu'une chromite de lanthane pour des températures de fonctionnement entre 900 et 1'000°C.

Afin d'améliorer la conductivité électrique à long terme de la plaque d'interconnexion et de l'interface cathode/plaque d'interconnexion, la surface de la plaque d'interconnexion, par exemple constituée de Fe26Cr, peut être traitée selon la procédure suivante : une solution aqueuse de cations (sous la forme de nitrate par exemple) est déposée sur la plaque d'interconnexion, de manière à obtenir après séchage une couche de quelques microns. Cette dernière est ensuite portée à haute température dans une atmosphère réductrice ou non. La durée du traitement peut par exemple être de 48 heures à 1000°C sous une atmosphère constituée d'argon et d'hydrogène. Les cations utilisés sont choisis dans la famille suivante : La, Ti, Sr, Ca, Mg, Ba, Nb, Mo, Mn, Cu, Ce, Pr. Un couple de cations améliorant particulièrement les propriétés recherchées est constitué par le lanthane et le strontium.

Les couches et assemblages de couches précités peuvent être réalisés en mettant en oeuvre les matériaux ci-dessus dispersés dans de l'eau et/ou des solvants organiques, additionnés de liants, d'agents mouillants, etc. sous forme de liquide, de barbotine et/ou de pâte. Parmi les techniques de mise en oeuvre, on peut citer le laminage, l'extrusion, le coulage en bandes, en particulier le co-coulage, ou encore le moulage avec ou sans gélification de la pâte ou suspension. La formation d'une ou plusieurs couches minces sur une couche support, en particulier une couche support anode, peut être obtenue par des techniques d'impression, par exemple en déposant une couche mince à l'aide de rouleaux sur une couche plus épaisse préalablement obtenue par un procédé de coulage en bandes. Ces techniques en tant que telles sont connues de l'homme du métier et sont décrites plus particulièrement, par exemple par Raphaël Ihringer et al., "Solid Oxide Fuel cells V", U. Stimming, S.C. Singhal, H. Tagawa and W. Lehnert, Editors, PV 97-40, p. 340-347, The Electrochemical Society Proceedings Series, Pennington, NJ (1997), ou par Mark A. Janney et al., J. Am. Ceram. Soc., 81 (3) 581-91 (1998),ou encore dans la thèse no 2'307 soutenue en 2001 à l'Ecole Polytechnique Fédérale de Lausanne. Elles sont également illustrées par les exemples ci-après.

D'autres particularités de l'invention apparaîtront à l'homme du métier à la lumière de la description détaillée des modes d'exécution et des exemples de réalisation ci-dessous, en relation avec les dessins, dans lesquels :
- la fig. 1 est une représentation schématique, en coupe verticale, d'un premier mode d'exécution de PEN;
- la fig. 2 est une représentation schématique, en coupe verticale, d'un deuxième mode d'exécution de PEN;
- la fig. 3 est une représentation schématique, en vue plane, d'un premier mode d'exécution de la face arrière d'une électrode;
- la fig. 4 est une représentation schématique, en coupe verticale, selon AA', du mode d'exécution de la fig. 3;
- la fig. 5 est une représentation schématique, en coupe verticale, d'un troisième mode d'exécution de PEN;
- la fig. 6 est une représentation schématique, en coupe verticale, d'un quatrième mode d'exécution de PEN;
- la fig. 7 est une représentation schématique, en coupe verticale, d'un cinquième mode d'exécution de PEN;
- la fig. 8 est une microphotographie d'une portion de face arrière d'anode selon l'invention;
- la fig. 9 est une représentation schématique, en vue plane, d'un deuxième mode d'exécution d'une face arrière d'électrode.

Dans ces figures, les couches de fonctions et de natures identiques ou similaires sont désignées par les mêmes numéros de référence et/ou les mêmes abréviations. Les épaisseurs des couches ne sont pas représentées à l'échelle.

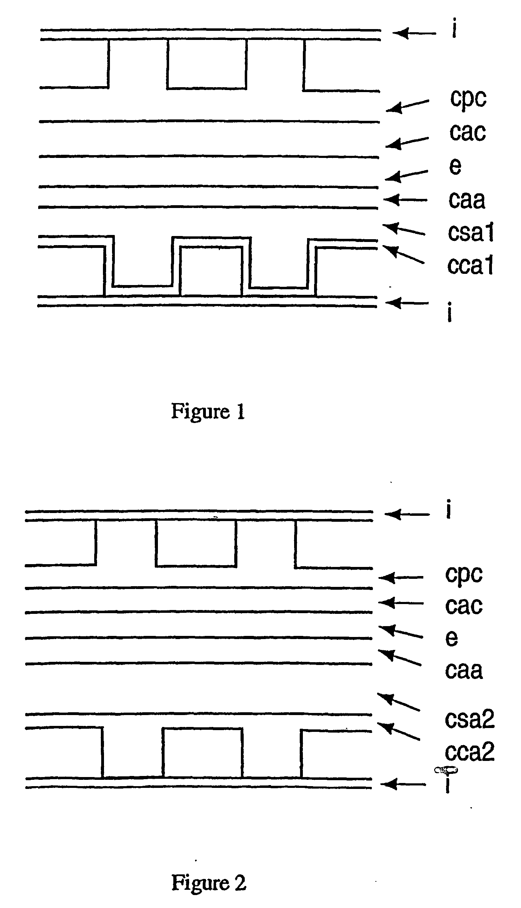

La fig. 1 illustre un premier mode d'exécution. Elle montre de haut en bas :
- une plaque d'interconnexion plane non structurée métallique i; son épaisseur peut être de l'ordre de 0,1 à 2 mm;
- une couche poreuse de cathode, cpc, structurée, obtenue par moulage, présentant sur sa face arrière des excroissances sous forme de plots de 0,2 à 1 mm de hauteur, dont les surfaces sommitales sont en contact avec la plaque d'interconnexion i; les espaces entre les plots forment des canaux de circulation de gaz;
- une couche active de cathode mince cac; son épaisseur peut être de l'ordre de 1 à 20 µm;
- une couche d'électrolyte e; son épaisseur peut être de l'ordre de 3 à 20 µm;
- une couche active d'anode caa; son épaisseur peut être de l'ordre de 1 à 20 µm;
- une couche support anode csa1 poreuse, structurée, son épaisseur pouvant être de l'ordre de 0,1 à 0,5 mm, obtenue par micromoulage, présentant sur sa face arrière des excroissances sous forme de plots de hauteur de l'ordre de 0,2 à 1 mm;
- une couche collectrice d'anode cca1 mince, de l'ordre de 5 à 20 µm, déposée sur la couche support anode, recouvrant les plots. Les surfaces sommitales de ces plots sont en contact avec une deuxième plaque d'interconnexion i, identique à la plaque supérieure, formant avec celle-ci des canaux de circulation de gaz.

La fig. 2 montre une structure similaire en ce qui concerne les couches i, cpc, cac, e et caa. Dans ce deuxième mode d'exécution, la face arrière d'une couche support anode poreuse csa2 est plane et porte une couche collectrice d'anode cca2 structurée, moulée et collée à la couche csa2. La couche collectrice d'anode cca2 présente sur sa face arrière une structure en relief constituée de plots dont les surfaces sommitales viennent au contact de la plaque d'interconnexion i, formant avec celle-ci des canaux de circulation de gaz. La couche collectrice cca2 participe à la fonction de support.

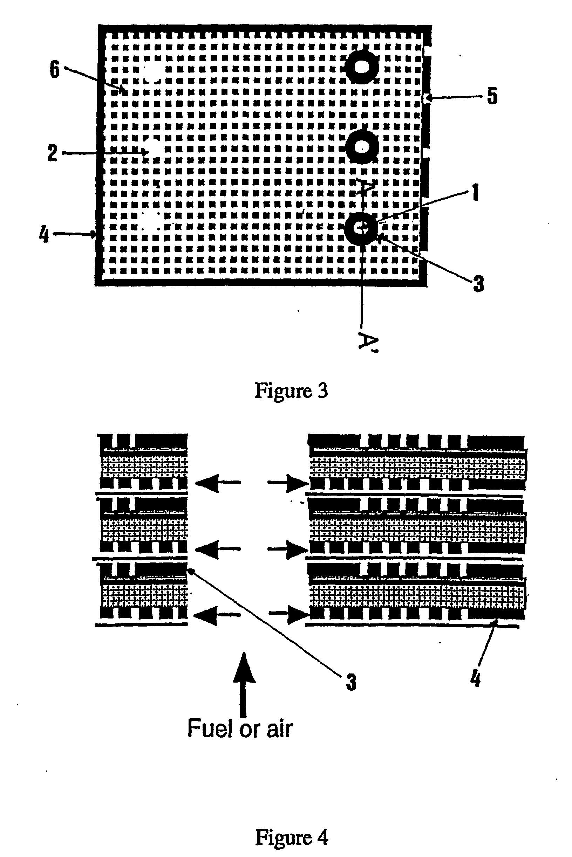

La fig. 3 montre une vue schématique de la face arrière d'une couche collectrice d'anode, dont la structure peut correspondre aussi bien à la couche cca1 de la fig. 1 qu'à la couche cca2 de la fig. 2. Une pluralité de plots 6 sont répartis uniformément sur l'ensemble de la surface de la couche collectrice d'anode. Celle-ci est percée de plusieurs trous. Les trous 1, situés à droite sur la fig. 3, sont entourés de margelles 3 de même hauteur que les plots 6. Les trous 2, situés sur la partie gauche de la figure, ne sont pas entourés. Toutes les couches d'un empilement portent les mêmes trous, agencés de telle façon à venir exactement en regard les uns des autres dans l'empilement, comme l'illustre la fig. 4. Lorsqu'un gaz est injecté par l'un des trous de gauche de la fig. 3, il circule entre les plots de la couche collectrice d'anode, diffusant dans cette couche et dans la couche support anode, et s'échappe par les ouvertures 5 de la portion ajourée de la bordure 4 de la face arrière de l'anode, et il est brûlé. Un gaz injecté par l'un des trous 1, situés à droite sur la fig. 3, ne peut pas atteindre en quantités substantielles la face arrière de l'anode, du fait des margelles 3 entourant ces trous. Seules des quantités minimes de gaz peuvent s'échapper, du fait de la porosité du matériau. Par contre, le trou correspondant de la face arrière de la cathode n'étant pas entouré d'une margelle, ce gaz circule sur la face correspondante arrière de la cathode.

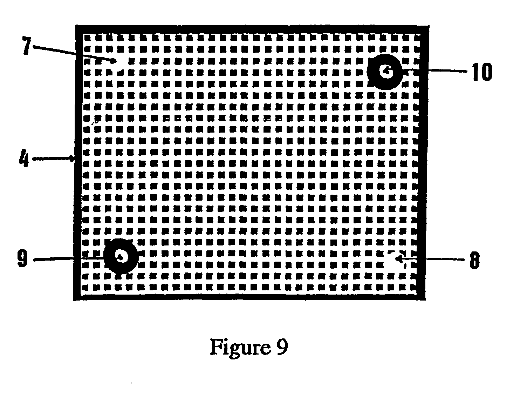

La fig. 9 montre une vue schématique de la face arrière d'une couche collectrice d'anode qui diffère du mode d'exécution illustré par la fig. 3 par l'absence d'ouvertures dans la bordure périphérale 4. Le gaz injecté par le trou 7 en haut et à gauche de la fig. 9 est évacué par le trou 8 en bas et à droite, ou vice versa.

L'alimentation et l'évacuation des gaz côté cathode se font de manière similaire par les trous situés respectivement en bas, à gauche, 9, et en haut, à droite, 10, de la fig. 9.

Ce mode d'exécution ne nécessite pas de tubulures latérales; il est de ce fait particulièrement bon marché à fabriquer.

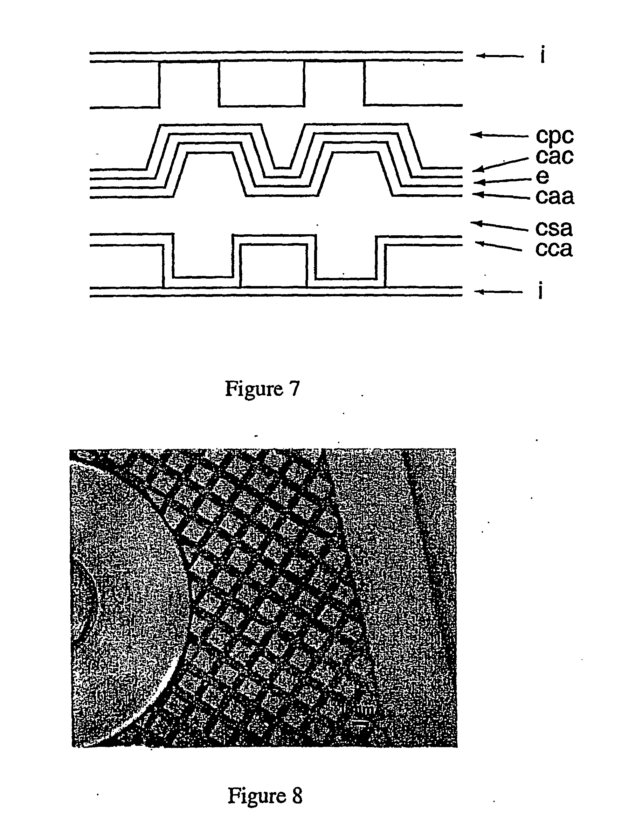

La fig. 8 est une microphotographie d'une portion de face arrière d'anode correspondant au mode d'exécution représenté schématiquement sur la fig. 9. On distingue sur la partie droite une portion de bordure, à gauche une portion de margelle et, entre les deux, une pluralité de plots de dimensions approximatives 1 x 1 x 1 mm, dont les faces sommitales apparaissent en teinte claire, séparées par des canaux de circulation de gaz de teinte plus sombre.

Dans le mode d'exécution montré par la fig. 8, aussi bien la margelle que la bordure sont réalisées dans le même matériau céramique que les plots, c'est-à-dire dans le matériau constitutif de la face arrière de l'électrode. Cette réalisation présente l'avantage d'une très grande simplicité mais s'accompagne d'un très léger défaut d'étanchéité, ce matériau étant poreux.

Pour parfaire l'étanchéité des margelles, on peut utiliser différentes pièces façonnées :
- Une rondelle de type "belleville" peut être utilisée seule ou noyée dans le matériau d'électrodes constituant par ailleurs la margelle. On peut utiliser des rondelles "belleville" en tôles d'acier réfractaire, par exemple Fe22Cr, avec des épaisseurs de tôles de l'ordre de 5 à 200 µm, en particulier de 20 à 75 µm. Les diamètres intérieurs et extérieurs des rondelles sont égaux respectivement aux diamètres intérieur et extérieur des margelles. Pour réaliser des margelles relativement épaisses, on peut empiler plusieurs rondelles "belleville" les unes sur les autres, ou encore souder deux rondelles "belleville" l'une contre l'autre, le long du bord de leurs plus petits diamètres.
- On peut également utiliser une rondelle en mica, seule ou noyée dans le matériau d'électrodes de la margelle.
- On peut également utiliser une tôle métallique très fine, en acier réfractaire ou aluminium ou aluminium-nickel, sous forme de tube comprimé en accordéon, comme joint, seule ou noyée dans le matériau d'électrodes de la margelle.
- On peut enfin utiliser dans les mêmes conditions une mousse métallique présentant une porosité fermée.
- Enfin, on peut réaliser une margelle constituée d'un mélange de matériaux d'électrodes avec une poudre de verre ou encore utiliser des rondelles en céramique ou verre céramique denses, noyées dans le matériau d'électrodes de la margelle.

Pour améliorer l'étanchéité de la bordure 4 montrée dans les figs 3 ou 9, on peut :
- agencer des bandes de mica sur les bords de la plaque électrode en les noyant ou non dans le matériau d'électrodes,
- réaliser la bordure en un mélange de matériaux d'électrodes avec une poudre de verre,
- agencer sur le bord une céramique dense ou un verre céramique noyé dans le matériau d'électrodes.

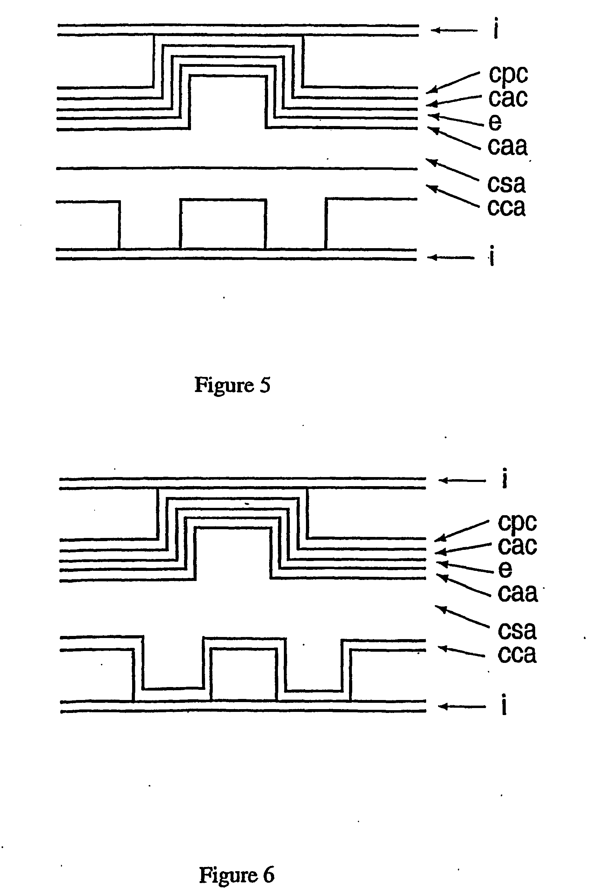

Dans les modes d'exécution illustrés par les fig. 1 à 4, les interfaces entre l'électrolyte et les électrodes sont planes. Le même agencement des canaux distributeurs de gaz peut être réalisé dans des modes d'exécution où l'interface entre l'électrolyte et les électrodes est structurée, comme l'illustrent les fig. 5 à 7.

La fig. 5 montre de bas en haut : une plaque d'interconnexion plane i; une couche collectrice d'anode cca structurée, avec une face avant plane, mais présentant sur sa face arrière des plots constituant des canaux de circulation de gaz; une couche support anode csa, avec une face arrière plane, mais comportant sur sa face avant une structure en relief présentant des excroissances sous forme de plots. Sur cette couche support anode est déposée une succession de couches minces, chacune de l'ordre de quelques microns, à savoir une couche active d'anode, une couche d'électrolyte, au moins une couche active de cathode et, optionnellement, une deuxième couche de cathode poreuse. L'épaisseur de l'ensemble de ces couches déposées étant faible par rapport aux dimensions, hauteurs et épaisseurs, des plots agencés sur la face avant de la couche support anode, les matériaux déposés ne viennent pas combler les espaces situés entre les plots, et ces espaces constituent des canaux de circulation de gaz lorsqu'une deuxième plaque d'interconnexion plane est placée sur le dessus du PEN.

La fig. 6 montre un autre mode d'exécution du PEN selon l'invention. Il diffère du mode d'exécution illustré par la fig. 5 par le fait que la couche support anode est formée de deux demi-couches structurées chacune sur une face et assemblées par leurs faces lisses, par un procédé décrit plus loin. Sur la face arrière de la couche support anode ainsi réalisée peut être déposée une fine couche collectrice d'anode. Sur la face avant de la csa sont déposées les mêmes couches que dans le mode d'exécution illustré par la fig. 5.

La fig. 7 montre un mode d'exécution dans lequel la couche support anode présente également sur sa face avant une structure en relief antérieure, sur laquelle sont déposées la couche active d'anode, l'électrolyte et la couche active de cathode, constitués de couches minces de quelques µm. Dans ce mode d'exécution, la couche poreuse de cathode est plus épaisse et présente sur sa face arrière, destinée à venir au contact de la plaque d'interconnexion i une structure en relief constituée de plots formant avec cette plaque d'interconnexion des canaux de circulation de gaz. Il convient de remarquer que dans ce mode d'exécution, la structure en relief antérieure de la face avant de la couche support anode est indépendante des structures en relief sous forme de plots des faces arrières de l'anode et de la cathode qui forment les canaux de circulation de gaz. La structure en relief antérieure de la face avant de la couche support anode n'est destinée qu'à augmenter la surface de travail, c'est-à-dire la surface de l'interface électrolyte/électrodes. La géométrie peut donc être différente des structures des faces arrières, en particulier par la dimension des éléments en relief, qui peut être beaucoup plus petite que celle des plots formant les canaux à gaz. La face avant de la couche support anode peut, dans ce cas, recevoir une microstructuration par estampage.

La microstructuration peut aussi être réalisée par un procédé de micromoulage. Ce procédé permet de réaliser, par exemple, une interface électrolyte/électrodes présentant une structure en "échiquier" comprenant des cases "hautes" et "basses", de largeur L, décalées d'une hauteur H. Le rapport entre surface développée et surface projetée augmente avec le rapport H/L. Pour H = L, le rapport est de 3; pour H = 2L, le rapport est de 5; pour H = 3L, le rapport est de 7 et pour H = 4L, le rapport est de 9. Dans le cas où l'interface électrolyte/électrodes présente une géométrie similaire à celle illustrée par la fig. 8, le rapport est approximativement de 3.

La réalisation des structures en relief représentée aux figs. 1 à 7 est illustrée par les exemples suivants.

### Exemple 1 : fabrication d'un moule pour canaux à gaz

Dans une première étape, on réalise un moule "master", représentant en positif les canaux de distribution de gaz. Ce moule master peut être fabriqué par micro-usinage d'une pièce métallique, par exemple par électroérosion. Il peut également être réalisé par un procédé de stéréo-lithographie ou par un procédé UV LIGA, ces procédés étant connus dans l'état de la technique.

Dans une deuxième étape, un caoutchouc liquide (RTV-ME 622, Wacker Silicone) est coulé sur le moule master. Après polymérisation du caoutchouc, ce dernier est retiré du moule master. On obtient ainsi un moule souple et en négatif des canaux de distribution de gaz.

### Exemple 2 : fabrication d'une couche collectrice d'anode structurée, par polymérisation

La couche est constituée au moyen de particules de zircone (8 YSZ) et de particules d'oxyde de nickel (60 à 100 % par rapport au poids de la zircone), de diamètre compris entre 0,2 et 1,5 µm.

Les poudres céramiques destinées à constituer la couche support anode sont dispersées dans de l'eau à l'aide d'un poly-électrolyte dispersant (Duramax D3005, Rohm and Haas Company). Un monomère acrylate bifonctionnel (SR 610, Sartomer, USA) est ajouté à la dispersion, dans une proportion de 8 à 15 % en poids par rapport aux poudres céramiques. Juste avant de disposer la dispersion dans le moule, on ajoute un réactif initiateur de réaction de polymérisation, par exemple persulfate d'ammonium et tétraméthylène diamine, chacun à 0,5 % en poids par rapport à la masse du monomère acrylate. La dispersion est disposée dans le moule en caoutchouc, dégazée, et le moule est appliqué sur une couche support anode lisse précédemment obtenue par coulage en bande et frittage, dont l'autre face porte déjà une couche d'électrolyte. Après polymérisation du monomère, le moule en caoutchouc est retiré. La structure collectant le courant est maintenant dans un état solide et liée à la couche sous-jacente, formant les canaux distributeurs de gaz.

### Exemple 3 : fabrication d'une structure distributrice de gaz (variante)

Le procédé est le même que dans l'exemple 2. Le réactif initiateur de polymérisation est le diéthylènetriamine, à 5 % en poids par rapport au monomère.

### Exemple 4 : fabrication d'une couche support anode structurée, par gélification

Des poudres céramiques de l'exemple 2, auxquelles on ajoute 20 % en volume de fibres de ZrO₂ de 100 µm de long et 10 µm de diamètre, sont dispersées dans de l'eau à l'aide d'un poly-électrolyte dispersant (Duramax, D3005, Rohm and Haas). Une gélatine (Gélatine Gelia, Stoess AG, Allemagne) est ajoutée à la dispersion à raison de 5 à 15 % en poids par rapport à la masse de l'eau, qui est chauffée à une température de 50°C. Une fois la gélatine dissoute, la dispersion est versée dans le moule en caoutchouc. La dispersion est dégazée, puis le moule en caoutchouc est déposé sur la face lisse d'une couche précédemment moulée et frittée. Une fois la dispersion refroidie à température ambiante, et laissée au repos pendant 24 heures, celle-ci se trouve gelée et le moule en caoutchouc peut être retiré. La structure en relief est maintenant à l'état solide et liée à la couche sous-jacente.

### Exemple 5 : fabrication d'une couche collectrice anode structurée avec propriétés catalytiques

Une poudre céramique du type Ni-8YSZ à 45 % en poids de Ni est dopée avec 10 % en volume de particules de CeO₂ portant 5 % de Ni catalytique. Le mélange est dispersé dans de l'eau à l'aide d'un dispersant de type poly-électrolyte (Duramax, D3005, Rohm and Haas). De l'agarose (agarose LMP analytical grade, Promega USA) est ajouté à la dispersion (5 à 15 % en poids par rapport à la masse de l'eau) qui est chauffée. Une fois l'agarose dissout, la dispersion est versée dans le moule en caoutchouc. A ce moment, un dégazage de la dispersion est opéré, puis le moule en caoutchouc est déposé sur la couche support anode d'une cellule (PEN) plane. Une fois la dispersion refroidie à la température ambiante, celle-ci se trouve gelée et le moule en caoutchouc peut être retiré. Les canaux distributeurs de gaz et collecteurs de courant sont maintenant dans un état solide et attachés (liés) à la cellule (PEN).

### Exemple 6 : fabrication d'une couche collectrice anode structurée avec propriétés catalytiques (variante)

Des poudres céramiques de l'exemple 5 sont dispersées dans de l'eau à l'aide d'un dispersant de type poly-électrolyte (Duramax, D3005, Rohm and Haas). Une gélatine de type cryogel (Cryogel 220/240, PB Gelatins, Belgique) est ajouté à la dispersion (5 à 15 % en poids par rapport à la masse de l'eau) qui est chauffée. Une fois la gélatine dissoute, la dispersion est versée dans le moule en caoutchouc. A ce moment, un dégazage de la dispersion est opéré, puis le moule en caoutchouc est déposé sur la cellule. Une fois la dispersion refroidie à la température ambiante et laissée au repos pendant 24 heures, celle-ci se trouve gelée et le moule en caoutchouc peut être retiré. La couche structurée comprenant les canaux distributeurs de gaz et les éléments collecteurs de courant est maintenant dans un état solide et attachée (liée) à la cellule (PEN).

### Exemple 7 : fabrication d'une couche poreuse de cathode par polymérisation

Le matériau utilisé peut être la LSM (La_{0.7}Sr_{0.3}MnO₃) ou LSC avec une granulométrie entre 0,2 et 1,5 µm.

Des poudres céramiques sont mélangées à un monomère epoxy liquide (Araldite DY-T, Vantico, Suisse), à raison de 0,3 à 1 g par gramme de poudre céramique. Après homogénéisation, le réactif durcissant (Aradur 21, Vantico, Suisse) est introduit dans la pâte à raison de 25 % en poids de la masse de monomère epoxy, et le mélange est réhomogénéisé. La pâte est placée dans le moule en caoutchouc et celui-ci, après dégazage de la pâte, est déposé sur un substrat plat et lisse de caoutchouc silicone. Après réticulation de l'epoxy, la structure en relief obtenue est détachée du moule en caoutchouc ainsi que du substrat en silicone. Cette structure en relief est insérée au moment du montage du stack, entre la cathode et la plaque métallique d'interconnexion.

### Exemple 8 : réalisation d'une structure en relief avec propriétés catalytiques sur une plaque d'interconnexion

La procédure opératoire est la même que dans l'exemple 5, sauf que le moule en caoutchouc contenant la pâte ou la dispersion est appliqué sur la plaque d'interconnexion constituée d'une feuille d'acier. Après solidification de la pâte ou de la dispersion, la structure en relief est portée par la plaque d'interconnexion, à l'état cru. Cette structure est ensuite mise en contact avec un PEN avec une anode plane, préfritté, et l'ensemble est porté à température d'opération de la pile (700°C à 800°C) après montage du stack.

### Exemple 9 : réalisation d'une structure en relief à l'aide d'un moule temporaire

Un moule sans fond, constitué d'une grille en matériau polymère, est placé sur un PEN lisse, précédemment fritté. Une dispersion liquide ou pâteuse du même type que celle des exemples 1 à 4 est déposée sur ce moule. La dispersion est infiltrée dans le moule et plaquée contre la couche sous-jacente à l'aide d'un rouleau. La grille n'a pas besoin d'être retirée après formation de la structure en relief, car elle brûle lors de la première mise en service à haute température du stack.

### Exemple 10 : réalisation d'une structure en relief à l'aide d'un moule temporaire (variante)

On suit le début de la procédure de l'exemple 9, mais avant qu'ait lieu la gélification de la pâte, une plaque d'interconnexion métallique est déposée sur la grille temporaire. Après gélification, la plaque d'interconnexion et le PEN sont liés l'un à l'autre par le gel. Ils forment un élément de stack. La grille sera détruite lors du fonctionnement à haute température.

### Exemple 11 : réalisation d'un électrolyte structuré

Une pâte ou une dispersion contenant un mélange de poudres d'oxydes de nickel (40 % en poids), et de poudre de zircone (8 YSZ) est réalisée selon l'une des procédures des exemples 1 à 4. Le moule en caoutchouc est rempli de la dispersion sur une hauteur de 0,5 mm. Une fois la dispersion solidifiée, celle-ci est retirée du moule et constitue le support anode à l'état cru. Sur le côté structuré de celui-ci est déposée une couche de pâte, composée de poudre de zircone (8 YSZ, 0,05 < D50 < 1 µm), d'eau, de dispersant (Duramax D3005) et de polymère (Natrosol HEC MR, Aqualon, France). L'épaisseur de la couche de pâte au-dessus de la structure est de 50 à 100 µm. Après séchage de cette pâte, la couche résiduelle de zircone 8 YSZ épouse la structure du support anode et a une épaisseur comprise entre 3 et 15 µm. Elle constitue l'électrolyte. Le support anode, recouvert de cette couche mince de zircone, est placé dans un four et fritté à une température de 1'400°C durant quatre heures. Ensuite, une couche de pâte, composée de poudre LSM (La_{0,8}Sr_{0,2}MnO₃, 0,05 < D50 < 2 µm), d'eau, de dispersant (Duramax D3005) et de polymère (Natrosol HEC MR), est déposée sur l'électrolyte fritté. L'épaisseur de la couche de pâte au-dessus de la structure est de 50 à 100 µm. Après séchage de cette dernière, la couche de LSM épouse la structure de l'électrolyte et a une épaisseur résiduelle comprise entre 3 et 15 µm. L'ensemble est à nouveau fritté à 1'200°C pendant deux heures.

### Exemple 12 : réalisation d'un support anode structuré sur les deux côtés

Deux moules en caoutchouc sont remplis de la dispersion à l'état de pâte sur une hauteur de 0,2 à 1 mm. Une fois les deux dispersions solidifiées, les deux moules en caoutchouc sont joints sur leurs faces montrant les dispersions solidifiées lisses, après dépôt d'une fine couche de dispersion non solidifiée entre les deux faces. Lorsque l'ensemble de la dispersion est passé à l'état solide, le support anode ainsi constitué à l'état cru est retiré des deux moules en caoutchouc. Le dépôt de l'électrolyte mince et de la cathode mince peuvent être effectués ensuite selon la procédure de l'exemple précédent.

### Exemple 13 : réalisation d'un empilement

Un PEN est réalisé à partir d'un ensemble manipulable, constitué d'une couche active de cathode, d'une couche d'électrolyte, d'une couche active d'anode et d'une couche support anode, toutes ces couches étant planes et lisses. L'ensemble se présente sous la forme d'un disque de 120 mm de diamètre, percé de trous pour l'amenée et l'évacuation de gaz. On ajoute, côté anode, une couche collectrice d'anode, selon la procédure de l'exemple 4. On ajoute, côté cathode, une couche poreuse de cathode selon la procédure de l'exemple 7. On empile de 20 à 40 PEN ainsi réalisés en alternance avec des plaques d'interconnexion métalliques planes, présentant les mêmes percements et on intègre cet empilement dans une enceinte de système SOFC.

### Exemple 14 : réalisation d'un empilement

On réalise un support anode structuré des deux côtés, la face avant étant microstructurée, portant une couche d'électrolyte et une couche active de cathode, selon la procédure de l'exemple 12. On ajoute par-dessus la couche active de cathode une couche poreuse de cathode selon la procédure de l'exemple 7. On dépose sur la face arrière du support anode une couche collectrice d'anode par peinture au pistolet et séchage. L'empilement est ensuite effectué comme dans l'exemple 13.

Les structures en relief des faces d'électrodes selon l'invention ont été illustrées dans les exemples et dans les figures par des plots en forme de parallélépipède rectangle. L'homme du métier comprendra aisément que d'autres formes, cylindriques, hexagonales, pyramidales, etc. peuvent être utilisées en remplissant les mêmes fonctions, circulation des gaz carburants et comburants, et augmentation de la surface réactive de l'interface électrolyte/électrode.

## Revendications

1. PEN de SOFC avec une cathode, ladite cathode comprenant une couche poreuse de cathode (cpc) et une couche active de cathode (cac), avec une anode, ladite anode comprenant une couche active d'anode (caa), une couche support anode (csa, csa1, csa2), ladite couche support anode constituant le support mécanique du PEN, et avec au moins une couche d'électrolyte (e), ladite couche d'électrolyte étant placée entre lesdites couches actives d'anode et de cathode, **caractérisé en ce que** ladite anode comprend une couche collectrice d'anode (cca, cca1, cca2), recouvrant la face arrière de la couche support anode, et **en ce que** la couche collectrice d'anode présente sur sa face arrière, destinée à venir au contact d'une plaque d'interconnexion (i), une structure en relief, choisie de telle sorte à former avec ladite plaque d'interconnexion des canaux de circulation de gaz.

2. PEN de SOFC selon la revendication 1, **caractérisé en ce que** la cathode présente également sur sa face arrière, destinée à venir au contact d'une plaque d'interconnexion (i), une structure en relief choisie de telle sorte à former avec ladite plaque d'interconnexion des canaux de circulation de gaz, et **en ce que** les structures en relief de l'anode et de la cathode comprennent chacune une pluralité de plots (6) proéminents, espacés les uns des autres, les surfaces sommitales des plots de l'anode étant sensiblement coplanaires et parallèles aux surfaces sommitales des plots de la cathode, également sensiblement coplanaires entre elles.

3. PEN de SOFC selon la revendication 2, **caractérisé en ce qu'**il comporte au moins un premier trou (1) et au moins un deuxième trou (2) le traversant axialement, que la structure en relief de la face arrière de l'anode comprend au moins une première margelle (3) entourant ledit premier trou, que la structure en relief de la face arrière de la cathode comprend au moins une deuxième margelle entourant ledit deuxième trou, ledit premier trou n'étant pas entouré par une dite deuxième margelle et ledit deuxième trou n'étant pas entouré par une dite première margelle.

4. PEN de SOFC selon la revendication 3, **caractérisé en ce que** les structures en relief des faces arrières respectives de la cathode et de l'anode comprennent chacune une bordure (4) entourant chaque face arrière, capable de former chacune, en coopérant avec une plaque d'interconnexion, une enceinte étanche sauf sur une portion ajourée (5) de ladite bordure.

5. PEN de SOFC selon la revendication 3, **caractérisé en ce qu'**il comprend au moins quatre trous axiaux et que les structures en relief des faces arrières de l'anode et de la cathode présentent chacune une bordure entourant respectivement lesdites faces arrières, et au moins un trou d'entrée (7, 9) et un trou de sortie (8, 10) pour respectivement chacun des gaz carburants et comburants.

6. PEN de SOFC selon l'une quelconque des revendications précédentes, **caractérisé en ce que** la face avant de l'anode, du côté de l'électrolyte, présente également une structure en relief.

7. PEN de SOFC selon la revendication 6, **caractérisé en ce que** la couche support anode (csa) présente sur sa face avant une structure en relief, que la couche active d'anode (caa), l'électrolyte (e) et la cathode (cac, cpc) consistent en des couches minces, revêtant ladite structure en relief de la dite face avant, et **en ce que** la structure en relief de ladite face avant de la couche support anode est choisie de telle sorte que la face arrière de la cathode puisse former des canaux de circulation de gaz avec une plaque d'interconnexion venant à son contact.

8. PEN de SOFC selon la revendication 7, **caractérisé en ce que** la structure de la face avant de la couche support anode est obtenue par un procédé de moulage et que les couches minces sont obtenues par un procédé de dépôt.

9. PEN de SOFC selon l'une des revendications 7 ou 8, **caractérisé en ce que** ladite structure en relief de la face avant de l'anode comprend une pluralité de plots de hauteur comprise entre 0,2 et 2 mm et que la distance entre les flancs de plots voisins est comprise entre 0,1 et 2 mm.

10. PEN de SOFC selon la revendication 6, **caractérisé en ce que** la couche support anode (csa) présente sur sa face avant une structure antérieure en relief, que la couche active d'anode (caa), l'électrolyte (e) et la couche active de cathode (cac) consistent en des couches minces et **en ce que** la couche poreuse de cathode (cpc) présente sur sa face arrière, destinée à venir au contact d'une plaque d'interconnexion, une structure en relief, choisie de telle sorte à former avec ladite plaque d'interconnexion des canaux de circulation de gaz.

11. PEN de SOFC selon la revendication 10, **caractérisé en ce que** ladite structure antérieure en relief de la face avant de la couche support anode est obtenue par estampage.

12. PEN de SOFC selon la revendication 10, **caractérisé en ce que** ladite structure antérieure en relief de la face avant de la couche support anode est obtenue par un procédé de micromoulage.

13. PEN de SOFC selon la revendication 12, **caractérisé en ce que** ladite structure antérieure en relief de la face avant de la couche support anode est obtenue par micromoulage et gélification.

14. PEN de SOFC selon l'une des revendications 10 à 13, **caractérisé en ce que** la hauteur des éléments en relief de ladite structure antérieure en relief est comprise entre 0,1 et 2 mm et **en ce que** la distance entre éléments voisins est comprise entre 50 µm et 2 mm.

15. PEN de SOFC selon l'une des revendications 6 à 14, **caractérisé en ce que** le rapport entre la hauteur et l'épaisseur des éléments de la-structure en relief de la face avant de l'anode est comprise entre 1 et 4.

16. PEN de SOFC selon l'une des revendications 6 à 15, **caractérisé en ce que** l'anode est obtenue en assemblant la face arrière lisse de la couche support anode avec la face avant lisse de la couche collectrice d'anode.

17. PEN de SOFC selon l'une des revendications précédentes, **caractérisé en ce que** les structures en relief des faces avant et/ou des faces arrières de l'anode et de la cathode sont obtenues par moulage, en particulier par micromoulage et gélification.

18. PEN de SOFC selon l'une quelconque des revendications 1 à 17, **caractérisé en ce que** le matériau de la couche support anode et/ou de la couche collectrice d'anode comprend des fibres choisies parmi les fibres céramiques et les fibres métalliques.

19. PEN de SOFC selon la revendication 18, **caractérisé en ce que** la proportion desdites fibres est de 20 à 40 % en volume, et en particulier de 25 à 35 % par rapport au volume total.

20. PEN de SOFC selon l'une quelconque des revendications 1 à 19, **caractérisé en ce que** le matériau de la couche poreuse de cathode comprend des fibres choisies parmi les fibres céramiques, en particulier les fibres LSM et les fibres LSC.

21. PEN de SOFC selon l'une quelconque des revendications 18 à 20, **caractérisé en ce que** le diamètre (d) desdites fibres est compris entre 1 et 50 µm, et le rapport L/d entre 2 et 30, en particulier que ledit diamètre est compris entre 2 et 30 µm et le rapport L/d entre 5 et 25, plus particulièrement que le diamètre est compris entre 5 et 15 µm et le rapport L/d entre 8 et 20.

22. PEN de SOFC selon l'une quelconque des revendications 1 à 21, **caractérisé en ce que** le matériau de la couche support anode et/ou couche collectrice d'anode comprend un catalyseur de reformage choisi parmi Ni déposé sur particules de céramique, NiCu déposé sur particules de céramiques, les chromites, CeO2, et leurs mélanges.

23. PEN de SOFC selon la revendication 22, **caractérisé en ce que** la quantité de catalyseur est comprise entre 5 et 15 % en volume du matériau de l'anode.

24. Empilement de SOFC, comprenant une pluralité de PEN selon l'une des revendications 3 à 22, et de plaques d'interconnexion, en alternance, **caractérisé en ce que** chacune desdites plaques d'interconnexion est une plaque plane et lisse munie de trous coïncidant, vus dans l'axe d'empilement, avec les trous des PEN.

## Patentansprüche

1. PEN für eine SOFC mit einer Kathode, wobei die Kathode eine poröse Kathodenschicht (cpc) und eine aktive Kathodenschicht (cac) aufweist, mit einer Anode, wobei die Anode eine aktive Anodenschicht (caa) und eine Tragschicht der Anode (csa, csa1, csa2) aufweist, wobei die Tragschicht der Anode die mechanische Stütze des PEN bildet und mit mindestens einer Schicht aus einem Elektrolyten (e), wobei diese Schicht aus dem Elektrolyten zwischen den aktiven Schichten der Anode und der Kathode angeordnet ist, **dadurch gekennzeichnet, dass** die Anode eine Anodensammelschicht (cca, cca1, cca2) aufweist, die die rückwärtige Seite der Tragschicht der Anode bedeckt und dass die Anodensammelschicht auf ihrer rückwärtigen Seite, die dazu dient, mit einer Verbindungsplatte (i) in Kontakt zu stehen, eine Reliefstruktur aufweist, die derart gewählt ist, dass sie mit der Verbindungsplatte Kanäle für eine Gaszirkulation bildet.

2. PEN für eine SOFC nach Anspruch 1, **dadurch gekennzeichnet, dass** die Kathode ebenfalls auf ihrer rückwärtigen Seite, die dazu dient, mit einer Verbindungsplatte (i) in Kontakt zu stehen, eine Reliefstruktur aufweist, die derart gewählt ist, dass sie mit dieser Verbindungsplatte Kanäle für eine Gaszirkulation bildet und dass die Reliefstrukturen der Anode und der Kathode jeweils eine Vielzahl von hervorspringenden Vorsprüngen (6) aufweisen, die im Abstand voneinander angeordnet sind, wobei die Gipfelflächen der Vorsprünge der Anode im wesentlichen koplanar und parallel zu den Gipfelflächen der Vorsprünge der Kathode sind, die ebenfalls im wesentlichen koplanar zueinander sind.

3. PEN für eine SOFC nach Anspruch 2, **dadurch gekennzeichnet, dass** er wenigstens eine erste Öffnung (1) und wenigstens eine zweite Öffnung (2) aufweist, die ihn in Axialrichtung durchsetzen, dass die Reliefstruktur der rückwärtigen Seite der Anode mindestens eine erste Umrandung (3) aufweist, die die erste Öffnung umgibt, dass die Reliefstruktur der rückwärtigen Seite der Kathode mindestens eine zweite Umrandung aufweist, die die zweite Öffnung umgibt und dass die erste Öffnung nicht von der zweiten Umrandung umgeben ist und dass die zweite Öffnung nicht von der ersten Umrandung umgeben ist.

4. PEN für eine SOFC nach Anspruch 3, **dadurch gekennzeichnet, dass** die Reliefstrukturen der rückwärtigen Seiten der Kathode bzw. der Anode jeweils einen Rand (4) aufweisen, der die entsprechende rückwärtige Seite umgibt und der jeweils im Zusammenwirken mit einer Verbindungsplatte einen dichten Raum bildet, mit Ausnahme einer durchbrochenen Stelle (5) des Randes.

5. PEN für eine SOFC nach Anspruch 3, **dadurch gekennzeichnet, dass** er wenigstens vier axiale Öffnungen aufweist und dass die Reliefstrukturen der rückwärtigen Seiten der Anode und der Kathode jeweils einen Rand aufweisen, der die entsprechenden rückwärtigen Seiten umgibt , sowie wenigstens eine Einlassöffnung (7,9) und wenigstens eine Auslassöffnung (8,10) für das Brenngas bzw. für das die Verbrennung bewirkende Gas.

6. PEN für eine SOFC nach einem der vorhergehenden Ansprüche, **dadurch gekennzeichnet, dass** die vordere dem Elektrolyten zugewandte Seite der Anode ebenfalls eine Reliefstruktur aufweist.

7. PEN für eine SOFC nach Anspruch 6, **dadurch gekennzeichnet, dass** di Tragschicht der Anode (csa) auf ihrer vorderen Seite eine Reliefstruktur aufweist, dass die aktive Anodenschicht (caa), der Elektrolyt (e) und die Kathode (cac, cpc) aus dünnen Schichten bestehen, die die Reliefstruktur der vorderen Seite bedecken und dass die Reliefstruktur der vorderen Seite der Tragschicht der Anode derart gewählt ist, dass die rückwärtige Seite der Kathode mit einer mit ihr in Kontakt stehenden Verbindungsplatte Kanäle für eine Gaszirkulation bildet.

8. PEN für eine SOFC nach Anspruch 7, **dadurch gekennzeichnet, dass** die Struktur der vorderen Seite der Tragschicht der Anode durch ein Gießverfahren und dass die dünnen Schichten durch ein Abscheideverfahren erhalten worden sind.

9. PEN für eine SOFC nach Anspruch 7 oder 8, **dadurch gekennzeichnet, dass** die Reliefstruktur der vorderen Seite der Anode eine Vielzahl von Vorsprüngen aufweist, deren Höhe zwischen 0,2 und 2 mm liegt und dass der Abstand zwischen den Flanken benachbarten Vorsprünge zwischen 0,1 und 2 mm liegt.

10. PEN für eine SOFC nach Anspruch 6, **dadurch gekennzeichnet, dass** die Tragschicht der Anode (csa) auf ihrer vorderen Seite eine vorhergehende Reliefstruktur aufweist, dass die aktive Anodenschicht (caa), der Elektrolyt e und die aktive Kathodenschicht (cac) als dünne Schichten ausgebildet sind und dass die poröse Kathodenschicht (cpc) auf ihrer rückwärtigen Seite, die dazu dient mit einer Verbindungsplatte in Kontakt zu stehen, eine Reliefstruktur aufweist, die derart gewählt ist, dass sie mit dieser Verbindungsplatte Kanäle für die Gaszirkulation bildet.

11. PEN für eine SOFC nach Anspruch 10, **dadurch gekennzeichnet, dass** die vorhergehende Reliefstruktur der vorderen Seite der Tragschicht der Anode durch einen Prägevorgang erhalten worden ist.

12. PEN für eine SOFC nach Anspruch 10, **dadurch gekennzeichnet, dass** die vorhergehende Reliefstruktur der vorderen Seite der Tragschicht der Anode durch ein Mikrostruktur-Verfahren erhalten worden ist.

13. PEN für eine SOFC nach Anspruch 12, **dadurch gekennzeichnet, dass** die vorhergehende Reliefstruktur der vorderen Seite der Tragschicht der Anode durch ein Mikrogießverfahren und eine Gelierung erhalten worden ist.

14. PEN für eine SOFC nach einem der Ansprüche 10 bis 13, **dadurch gekennzeichnet, dass** die Höhe der Bauteile der vorhergehenden Reliefstruktur zwischen 0,1 und 2 mm liegt und dass der Abstand zwischen benachbarten Bauteilen zwischen 50 µm und 2 mm liegt.

15. PEN für eine SOFC nach einem der Ansprüche 6 bis 14, **dadurch gekennzeichnet, dass** das Verhältnis zwischen der Höhe und der Dicke der Bauteile der Reliefstruktur der vorderen Seite der Anode zwischen 1 und 4 liegt.

16. PEN für eine SOFC nach einem der Ansprüche 6 bis 15, **dadurch gekennzeichnet, dass** die Anode durch Zusammenbau der glatten rückwärtigen Seite der Tragschicht der Anode mit der glatten vorderen Seite der Anodensammelschicht erhalten wird.

17. PEN für eine SOFC nach einem der vorhergehenden Ansprüche, **dadurch gekennzeichnet, dass** die Reliefstrukturen der vorderen Seiten und/oder der rückwärtigen Seiten der Anode und der Kathode durch Giessen erhalten worden sind, insbesondere durch Mikrogießen und Gelierung.

18. PEN für eine SOFC nach einem der Ansprüche 1 bis 17, **dadurch gekennzeichnet, dass** das Material der Tragschicht der Anode und/oder der Anodensammelschicht Fasern enthält, die aus keramischen Fasern und metallischen Fasern ausgewählt worden sind.

19. PEN für eine SOFC nach Anspruch 18, **dadurch gekennzeichnet, dass** der Anteil dieser Fasern zwischen 20 und 40 Volumenprozent beträgt und insbesondere 25 bis 35 Volumenprozent bezüglich des gesamten Volumens.

20. PEN für eine SOFC nach einem der Ansprüche 1 bis 19, **dadurch gekennzeichnet, dass** das Material der porösen Kathodenschicht Fasern enthält, die aus keramischen Fasern ausgewählt worden sind, insbesondere aus LSM-Fasern und LSC-Fasern.

21. PEN für eine SOFC nach einem der Ansprüche 18 bis 20, **dadurch gekennzeichnet, dass** der Durchmesser (d) dieser Fasern zwischen 1 und 50 µm liegt und dass das Verhältnis L/d zwischen 2 und 30 liegt, wobei vorzugsweise der Durchmesser zwischen 2 und 30 µm liegt und das Verhältnis L/d zwischen 5 und 25 liegt und insbesondere der Durchmesser zwischen 5 und 15 µm liegt und das Verhältnis L/d zwischen 8 und 20 liegt.

22. PEN für eine SOFC nach einem der Ansprüche 1 bis 21, **dadurch gekennzeichnet, dass** das Material der Tragschicht der Anode und/oder der Anodensammelschicht einen Katalysator für das Reformieren aufweist, der ausgewählt worden ist aus auf keramischen Teilchen abgeschiedenem Ni, auf keramischen Teilchen abgeschiedenem NiCu, Chromeisenstein, CeO2 und deren Gemischen.

23. PEN für eine SOFC nach Anspruch 22, **dadurch gekennzeichnet, dass** der Anteil des Katalysators zwischen 5 und 15 Volumenprozent bezüglich des Anodenmaterials beträgt.

24. SOFC-Stapel, mit einer Vielzahl von PEN nach einem der Ansprüche 3 bis 22 und mit Verbindungsplatten, die abwechselnd angeordnet sind, **dadurch gekennzeichnet, dass** jede Verbindungsplatte eine ebene und glatte Platte ist, die mit Öffnungen versehen ist, die in Axialrichtung des Stapels gesehen zu den Öffnungen der PEN ausgerichtet sind.

## Claims

1. An SOFC PEN with a cathode, said cathode comprising a porous cathode layer (cpc) and an active cathode layer (cac), with an anode, said anode comprising an active anode layer (caa), an anode support layer (csa, csa1, csa2), said anode support layer constituting the mechanical support of the PEN, and with at least one electrolyte layer (e), said electrolyte layer being placed between said active anode and cathode layers, **characterized in that** said anode comprises an anode collector layer (cca, cca1, cca2) which covers the rear face of the anode support layer, and **in that** the anode collector layer presents, on its rear face which is designed to come into contact with an interconnecting plate (i), a raised structure which is chosen so as to form gas circulation channels with said interconnecting plate.

2. The SOFC PEN as claimed in claim 1, **characterized in that** the cathode also has, on its rear face which is designed to come into contact with an interconnecting plate (i), a raised structure which is chosen so as to form gas circulation channels with said interconnecting plate, and **in that** the raised structures of the anode and of the cathode each comprise a plurality of prominent bumps (6) which are spaced apart from one another, the summit surfaces of the bumps of the anode being substantially coplanar and parallel to the summit surfaces of the bumps of the cathode, the latter likewise being coplanar with one another.

3. The SOFC PEN as claimed in claim 2, **characterized in that** it comprises at least one first hole (1) and at least one second hole (2) passing axially through it, **in that** the raised structure of the rear face of the anode comprises at least one first lip (3) that surrounds said first hole, and **in that** the raised structure of the rear face of the cathode comprises at least one second lip that surrounds said second hole, said first hole not being surrounded by a said second lip and said second hole not being surrounded by a said first lip.

4. The SOFC PEN as claimed in claim 3, **characterized in that** the raised structures of the respective rear faces of the cathode and anode each comprise an edging (4) that surrounds each rear face, each capable of forming, in collaboration with an interconnecting plate, a chamber that is sealed except on an open portion (5) of said edging.

5. The SOFC PEN as claimed in claim 3, **characterized in that** it comprises at least four axial holes and **in that** the raised structures of the rear faces of the anode and cathode each have an edging that respectively surrounds said rear faces, and at least one inlet hole (7, 9) and one outlet hole (8, 10) for each of the fuel and oxidizing gases respectively.

6. The SOFC PEN as claimed in any of the preceding claims, **characterized in that** the front face of the anode on the electrolyte side also has a raised structure.

7. The SOFC PEN as claimed in claim 6, **characterized in that** the anode support layer (csa) has a raised structure on its front face, **in that** the active anode layer (caa), the electrolyte (e) and the cathode (cac, cpc) consist of thin layers which cover said raised structure of said front face, and **in that** the raised structure of said front face of the anode support layer is chosen so that the rear face of the cathode can form gas circulation channels with an interconnecting plate with which it comes into contact.

8. The SOFC PEN as claimed in claim 7, **characterized in that** the structure of the front face of the anode support layer is obtained by a molding process and **in that** the thin layers are obtained by a deposition process.

9. The SOFC PEN as claimed in either of claims 7 and 8, **characterized in that** said raised structure of the front face of the anode comprises a plurality of bumps having a height of between 0.2 and 2 mm, and **in that** the distance between the flanks of neighboring bumps is between 0.1 and 2 mm.

10. The SOFC PEN as claimed in claim 6, **characterized in that** the anode support layer (csa) has an anterior raised structure on its front face, **in that** the active anode layer (caa), the electrolyte (e) and the active cathode layer (cac) consist of thin layers, and **in that** the porous cathode layer (cpc) has, on its rear face which is designed to come into contact with an interconnecting plate, a raised structure which is chosen so as to form gas circulation channels with said interconnecting plate.

11. The SOFC PEN as claimed in claim 10, **characterized in that** said anterior raised structure of the front face of the anode support layer is obtained by stamping.

12. The SOFC PEN as claimed in claim 10, **characterized in that** said anterior raised structure of the front face of the anode support layer is obtained by a micromolding process.

13. The SOFC PEN as claimed in claim 12, **characterized in that** said anterior raised structure of the front face of the anode support layer is obtained by micromolding and gelling.

14. The SOFC PEN as claimed in any of claims 10 to 13, **characterized in that** the height of the raised elements of said anterior raised structure is between 0.1 and 2 mm and **in that** the distance between neighboring elements is between 50 µm and 2 mm.

15. The SOFC PEN as claimed in any of claims 6 to 14, **characterized in that** the ratio between the height and the thickness of the elements of the raised structure of the front face of the anode is between 1 and 4.

16. The SOFC PEN as claimed in any of claims 6 to 15, **characterized in that** the anode is obtained by joining the smooth rear face of the anode support layer to the smooth front face of the anode collector layer.

17. The SOFC PEN as claimed in any of the preceding claims, **characterized in that** the raised structures of the front faces and/or rear faces of the anode and cathode are obtained by molding, in particular by micromolding and gelling.

18. The SOFC PEN as claimed in any of claims 1 to 17, **characterized in that** the material of the anode support layer and/or anode collector layer comprises fibers selected from ceramic fibers and metal fibers.

19. The SOFC PEN as claimed in claim 18, **characterized in that** the proportion of said fibers is from 20 to 40% by volume, and in particular from 25 to 35% with respect to the total volume.

20. The SOFC PEN as claimed in any of claims 1 to 19, **characterized in that** the material of the porous cathode layer comprises fibers selected from ceramic fibers, in particular LSM fibers and LSC fibers.

21. The SOFC PEN as claimed in any of claims 18 to 20, **characterized in that** the diameter (d) of said fibers is between 1 and 50 µm and the ratio L/d is between 2 and 30, in particular **in that** said diameter is between 2 and 30 µm and the ratio L/d is between 5 and 25, more particularly **in that** the diameter is between 5 and 15 µm and the ratio L/d is between 8 and 20.

22. The SOFC PEN as claimed in any of claims 1 to 21, **characterized in that** the material of the anode support layer and/or anode collector layer comprises a reforming catalyst selected from Ni deposited on ceramic particles, NiCu deposited on ceramic particles, chromites, CeO₂, and mixtures thereof.

23. The SOFC PEN as claimed in claim 22, **characterized in that** the amount of catalyst is between 5 and 15% by volume of the material of the anode.

24. An SOFC stack, comprising a plurality of PENs as claimed in any of claims 3 to 22 and interconnecting plates, in an alternating manner, **characterized in that** each of said interconnecting plates is a smooth and planar plate provided with holes that are coincident with the holes of the PENs, as seen in the stacking axis.
